# EUROPÄISCHE PATENTANMELDUNG

(11) **EP 2 827 478 A1**
(43) Veröffentlichungstag der Anmeldung: **21.01.2015**
(21) Anmeldenummer: 13176665.1
(22) Anmeldetag: 16.07.2013
(51) Int. Cl.: H02K 5/20, H02K 9/20, F16H 57/04, H02K 7/06

(54) **Elektrozylinder**

(71) Anmelder: Narr Beteiligungs GmbH, 73230 Kirchheim/Teck (DE)
(72) Erfinder: Langbein, Ulrich, 70329 Stuttgart (DE)
(74) Vertreter: Ruckh, Rainer Gerhard

(57) **Zusammenfassung**

Die Erfindung betrifft einen Elektrozylinder mit einem Elektromotor und einer Mechanikeinheit, welche ein Stellelement aufweist. Der Elektromotor erzeugt eine Linearbewegung des Stellelements. Weiter ist zur Abfuhr von Wärme eine Anordnung von Wärmerohren vorgesehen.

## Beschreibung

Die Erfindung betrifft einen Elektrozylinder.

Derartige Elektrozylinder bilden generell Einheiten zur Erzeugung von Linearbewegungen, die in verschiedensten industriellen Prozessen verwendet werden.

Generell weist ein Elektrozylinder einen Elektromotor und eine Mechanikeinheit auf, die koaxial verlaufend hintereinander angeordnet sind. Die Mechanikeinheit des Elektrozylinders weist ein Linearbewegungen ausführendes Stellelement aus. Diese Linearbewegung wird mittels des Elektromotors erzeugt. Vorzugsweise weist die Mechanikeinheit einen Gewindetrieb auf, der die Drehbewegung des Elektromotors in eine Linearbewegung umsetzt. Generell sind auch Systeme im Einsatz, bei welchen der Elektromotor nicht koaxial zur Mechanikeinheit, sondern seitlich versetzt zu dieser angeordnet ist.

Der Einbau des Elektrozylinders in externen Einheiten wie Maschinen erfolgt immer derart, dass die Mechanikeinheit an die externe Einheit angeschlossen wird, da diese das an der Maschine genutzte, die Linearbewegung ausführende Stellelement enthält.

Bei derartigen Elektrozylindern besteht ein wesentliches Problem darin, dass diese im Betrieb stark erhitzen. Da die Leistungsfähigkeit des Elektromotors durch dessen maximale Temperatur begrenzt ist, führt somit eine hohe Wärmeentwicklung im Elektrozylinder zu einer unerwünschten Leistungsverminderung des Elektromotors und damit des gesamten Elektrozylinders.

Um eine solche Leistungsverminderung zu vermeiden, ist es notwendig, die im Elektrozylinder entstehende Wärme möglichst effizient abzuführen.

Hierbei besteht jedoch ein wesentliches Problem darin, dass die im Elektromotor entstehende Wärme, die mit der Drehzahl und der Last des Elektromotors ansteigt, nicht direkt an die Maschine abgeleitet werden kann, da nicht der Elektromotor sondern die Mechanikeinheit an die Maschine angeschlossen ist. Da Elektrozylinder beispielweise relativ lange und schlanke Bauformen aufweisen, ist die Wärmeleitung vom Elektromotor über die Mechanikeinheit zur Maschine relativ gering, so dass über diese Wärmeleitung keine ausreichende Entwärmung des Elektrozylinders erzielt wird. Prinzipiell könnte die Wärmeleitung dadurch verbessert werden, den Querschnitt des Elektrozylinders zu vergrößern. Dies jedoch führt zu unerwünscht großen Bauformen des Elektrozylinders, das heißt der Elektrozylinder wird schwerer, zudem ergeben sich dadurch höhere Herstellkosten.

Um eine verbesserte Wärmeabfuhr zu erhalten, kann prinzipiell eine Luftkühlung für den Elektrozylinder vorgesehen werden, beispielsweise in Form von Kühlrippen oder mittels eines Lüfters. Nachteilig hierbei ist, dass sich derartige Mittel zur Luftkühlung im Betrieb des Elektrozylinders im Laufe der Zeit mit Staub zusetzen, wodurch dann die Kühlleistung abnimmt.

Weiterhin ist es auch möglich, eine Wasserkühlung für den Elektrozylinder vorzusehen. Hier ist, wie auch bei einem Luftkühler, ein beträchtlicher konstruktiver Zusatzaufwand erforderlich.

Der Erfindung liegt die Aufgabe zugrunde, einen Elektrozylinder der eingangs genannten Art bereitzustellen, welcher bei geringem konstruktivem Aufwand eine hohe Leistungsfähigkeit aufweist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die Erfindung betrifft einen Elektrozylinder und weist einen Elektromotor, eine Mechanikeinheit und ein Stellelement auf. Der Elektromotor erzeugt eine Linearbewegung des Stellelements. Zur Abfuhr von Wärme ist eine Anordnung von Wärmerohren vorgesehen.

Durch den Einsatz der Wärmerohre wird die Wärmeleitung innerhalb des Elektrozylinders erheblich verbessert und damit auch die Abfuhr von Wärme aus dem Elektrozylinder.

Die Wärmerohre sind autarke, wartungsfreie Einheiten, die ohne großen konstruktiven Mehraufwand in dem Elektrozylinder eingebaut werden können. Die Funktion eines Wärmerohrs ist dabei generell derart, dass innerhalb des Wärmerohrs ein Transportmedium, insbesondere Wasser, vorhanden ist, mittels dessen große Wärmemengen transportiert werden können. Das Wärmerohr wird dann in Kontakt mit einer zu kühlenden Stelle, von welcher Wärme abzuführen ist und einer Stelle, an welcher Wärme abgeführt werden kann, gebracht. Dadurch bildet sich im Wärmerohr eine Heizzone und eine Kühlzone aus. In der Heizzone verdampft das Wasser oder allgemein das Transportmedium, während in der Kühlzone das Wasser kondensiert. Im Wärmerohr, insbesondere in dessen Mantel, ist ein Sintermaterial oder dergleichen vorgesehen, welches das kondensierte Wasser von der Kühlzone zur Heizzone zurück transportiert. Das so gebildete Wärmerohr bildet somit ein geschlossenes System, bei welchem mit dem Transportmedium große Wärmemengen transportiert werden können. Der Rücktransport des kondensierten Wassers in einem Wärmerohr erfolgt durch die Kapillarwirkung des Sintermaterials. Überraschenderweise kann der erfindungsgemäße Elektrozylinder auch in vertikalen Anordnungen erfolgreich eingesetzt werden, bei welchen das kondensierte Wasser im Sintermaterial Strecken bis zu 300 mm gegen die Schwerkraft zurücklegen muss. Durch den erfindungsgemäßen Einsatz der Wärmerohre wird allein durch die damit verbesserte Wärmeleitung ein übermäßiges Erhitzen des Elektrozylinders auch dann verhindert, wenn der Elektromotor bei höheren Leistungen betrieben wird. Dies bedeutet umgekehrt, dass der Elektrozylinder ohne Gefahr von Überhitzungen auch dauerhaft bei hohen Leistungen betrieben werden kann.

Die Anzahl der Wärmerohre ist an die Baugröße des Elektrozylinders angepasst. Prinzipiell könnte sogar ein einzelnes Wärmerohr eingesetzt werden.

Da die Wärmerohre Elemente mit sehr hoher Wärmeleitung bilden, brauchen die weiteren Komponenten keine hohe Wärmeleitung aufweisen, da der über die Wärmerohre erfolgende Wärmetransport für eine hinreichende Entwärmung des Elektrozylinders ausreichend ist. Damit ergibt sich als weiterer Vorteil der Erfindung, dass der Elektrozylinder eine kompakte, schlanke Bauform aufweisen kann, da keine großen Querschnitte des Elektrozylinders zur Erhöhung der Wärmeleitung benötigt werden.

Weiterhin sind auch keine weiteren Kühlvorrichtungen wie Luft- oder Wasserkühlungen für eine hinreichende Entwärmung des Elektrozylinders erforderlich. Der erfindungsgemäße Elektrozylinder kann somit kostengünstig gefertigt werden.

Gemäß einer besonders vorteilhaften Ausgestaltung der Erfindung ist das oder jedes Wärmerohr in der Mechanikeinheit vorgesehen, das heißt alle Wärmerohre sind in der Mechanikeinheit des Elektrozylinders integriert.

Der Erfindung liegt dabei die Erkenntnis zugrunde, dass ein Elektrozylinder stets mit einer Mechanikeinheit an eine externe Einheit wie eine Maschine angeschlossen ist. Über die Maschine kann Wärme aus dem Elektrozylinder effizient abgeführt werden.

Im Elektromotor generierte Wärme, bedingt durch Verluste durch den ohmschen Widerstand der Wicklungen, durch Ummagnetisierungsverluste und durch Wirbelstromverluste, kann bei herkömmlichen Elektrozylindern jedoch nur unzureichend durch Wärmeleitung über die angeschlossene Maschine abgeführt werden, da die Mechanikeinheit zwischen dem Elektromotor und der Maschine eine sehr geringe Wärmeleitfähigkeit aufweist.

Bei dem erfindungsgemäßen Elektrozylinder wird die schlecht wärmeleitende Mechanikeinheit durch die dort eingebrachten Wärmerohre, das heißt Elementen mit hoher Wärmeleitfähigkeit überbrückt, so dass im Elektromotor generierte Wärme effizient über die Wärmerohre geführt und dann über die Maschine nach außen abgegeben werden kann.

Für die weiteren Komponenten der Mechanikeinheit brauchen somit keine besonderen Anforderungen an die Wärmeleitfähigkeit gestellt werden, so dass diese insbesondere kostengünstig und in kleinen, insbesondere schlanken Bauformen hergestellt werden können.

Ein weiterer wesentlicher Vorteil der Erfindung besteht darin, dass mit den Wärmerohren auch in der Mechanikeinheit selbst generierte Wärme aus dem Elektrozylinder ausgleitet werden kann.

Gemäß einer vorteilhaften Ausgestaltung der Erfindung ist das oder jedes Wärmerohr in Längsrichtung der Mechanikeinheit verlaufend angeordnet.

Dabei ist an einem längsseitigen Ende der Mechanikeinheit ein Montageflansch zum Anschluss an eine externe Einheit vorgesehen. Der Montageflansch bildet Kontaktflächen für das oder die Wärmerohre aus.

Damit kann sowohl Wärme, die im Elektromotor generiert, als auch Wärme die in der Mechanikeinheit generiert wird, über die Wärmerohre transportiert und die Kontaktflächen des Montageflansches aus dem Elektrozylinder ausgleitet werden.

Gemäß einer konstruktiv vorteilhaften Ausgestaltung weist die Mechanikeinheit ein Gehäuse auf, in welchem das oder die Wärmerohre angeordnet sind.

Insbesondere weist das Gehäuse einen Gehäusekörper mit Bohrungen auf, in welchen Wärmerohre geführt sind.

Die Wärmerohre können so ohne wesentlich die Bauform des Elektrozylinders zu vergrößern in dessen Mechanikeinheit integriert werden.

Damit kann die durch Reibung in der Lagerung generierte Wärme nach außen abgeführt werden.

Generell kann auch wenigstens ein Wärmerohr über ein Gleitlager mit beweglichen Teilen der Mechanikeinheit verbunden sein.

Damit können sogar sich in der Mechanikeinheit bewegende Komponenten an die Wärmerohre angekoppelt werden, um in diesen entstehende Wärme abzuführen.

Die vorliegende Erfindung ist in Elektrozylindern unterschiedlichster Bauform einsetzbar. Insbesondere wird die Erfindung bei Elektrozylindern eingesetzt, bei welchen die Mechanikeinheit einen Gewindetrieb mit einer Gewindestange und einer die Gewindestange umschließenden Mutter aufweist, wobei entweder die Gewindestange eine Linearbewegung und die Mutter eine Drehbewegung ausführt, oder die Mutter eine Linearbewegung und die Gewindestange eine Drehbewegung ausführt.

Gemäß einer vorteilhaften Ausführungsform weist die Mechanikeinheit eine Lagerung für die Gewindestange auf. Diese Lagerung muss hohe Kräfte aufnehmen, so dass dort eine entsprechend hohe Wärmeentwicklung auftritt. Weiterhin tritt auch durch Reibungsverluste eine hohe Wärmeentwicklung auf. Die im Bereich dieser Lagerung entstehende Wärme wird vorteilhaft mit mehreren im Gehäuse der Mechanikeinheit verlaufenden Wärmerohren abgeführt.

Weiterhin können im Gehäuse der Mechanikeinheit vorgesehene Wärmerohre insbesondere derart angeordnet sein, dass wenigstens ein Wärmerohr in Kontakt mit der Mutter ist.

Schließlich kann ein in der Gewindestange verlaufendes Wärmerohr vorgesehen sein, so dass dort durch Reibung entstehende Wärme direkt aus der Gewindestange abgeführt werden kann.

Die Erfindung wird im Folgenden anhand der Zeichnungen erläutert. Es zeigen:
- Figur 1:: Schematische Darstellung eines Ausführungsbeispiels des erfindungsgemäßen Elektrozylinders.
- Figur 2:: Schematische Darstellung eines Wärmerohrs für den Elektrozylinder gemäß Figur 1.

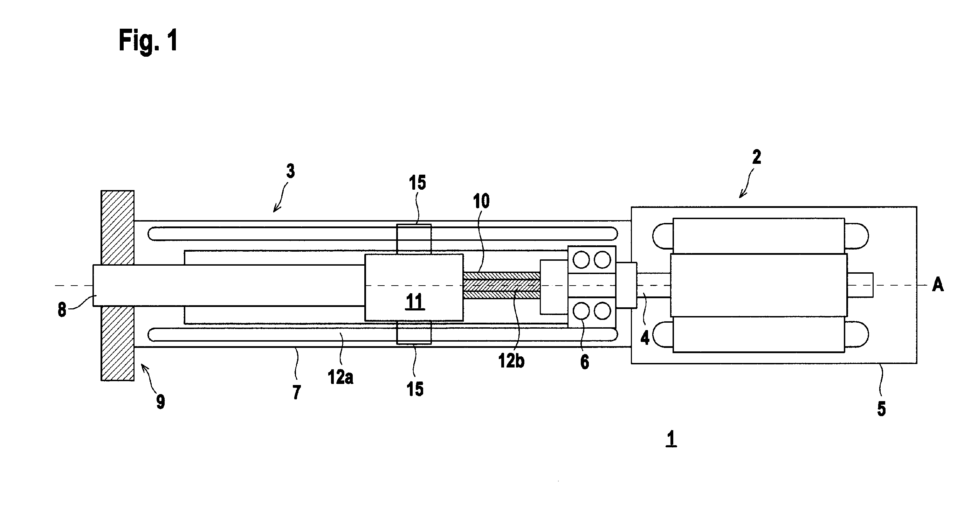

Figur 1 zeigt schematisch ein Ausführungsbeispiel eines Elektrozylinders 1. Der Elektrozylinder 1 bildet allgemein ein Element zur Generierung von Linearbewegungen eines Stellelements.

Der Elektrozylinder 1 umfasst einen Elektromotor 2 und eine an ein längsseitiges Ende des Elektromotors 2 anschließende Mechanikeinheit 3. Der Elektromotor 2 und die Mechanikeinheit 3 sind koaxial längs einer Achse A angeordnet.

Der Elektromotor 2 weist in bekannter Weise einen Rotor und einen Stator sowie eine mit den Antriebskomponenten des Elektromotors 2 angetriebene Motorwelle 4 auf, die aus dem Motorgehäuse 5 des Elektromotors 2 herausgeführt ist. Die vom Rotor und Stator gebildete Rotor-Stator-Einheit ist in Figur 1 schematisch dargestellt und mit der Bezugsziffer 2a gekennzeichnet.

Zur Ankopplung des Elektromotors 2 an die Mechanikeinheit 3 weist diese eine Lagerung 6 auf, die die Motorwelle 4 aufnimmt. Die Lagerung 6 wie auch die weiteren Komponenten der Mechanikeinheit 3 sind in einem Gehäuse 7 der Mechanikeinheit 3 integriert.

Das die Linearbewegung ausführende Stellelement ist im vorliegenden Fall von einer Kolbenstange 8 gebildet, deren Längsachse mit der Achse A des Elektrozylinders 1 zusammenfällt. Die Kolbenstange 8 ist im Gehäuse 7 der Mechanikeinheit 3 gelagert, wobei die Kolbenstange 8 an dem den Elektromotor 2 abgewandten längsseitigen Ende des Gehäuses 7 der Mechanikeinheit 3 ausmündet. In diesem Bereich der Mechanikeinheit 3 ist ein Montageflansch 9 vorgesehen, mittels dessen der Elektrozylinder 1 an eine externe Einheit, im vorliegenden Fall ein Maschinengestellt, angekoppelt wird.

Die Kolbenstange 8 führt eine Linearbewegung entlang der Achse A aus. Zur Erzeugung dieser Linearbewegung aus der Drehbewegung des Elektromotors 2 weist die Mechanikeinheit 3 einen Gewindetrieb auf. Der Gewindetrieb umfasst im vorliegenden Fall eine mit der Motorwelle 4 gekoppelte und mit dieser mitdrehende Gewindestange 10. Die Gewindestange 10 verläuft in der Achse und ist innerhalb eines Hohlraums der Kolbenstange 8 geführt. Der Gewindetrieb weist weiterhin eine Mutter 11 auf, die die Gewindestange 10 umschließt und die verdrehsicher im Gehäuse 7 der Mechanikeinheit 3 gelagert ist. Die Mutter 11 ist fest mit der Kolbenstange 8 verbunden. Im vorliegenden Fall sind die Kolbenstange 8 und die an deren hinteren Ende anschließende Mutter 11 einstückig ausgebildet. Durch die Drehbewegung der Motorwelle 4 wird entsprechend die Gewindestange 10 gedreht. Durch die Drehung der Gewindestange 10 wird eine Linearbewegung der Mutter 11 erzeugt, die auf die Kolbenstange 8 übertragen wird.

Die Gewindestange 10 ist in der Lagerung 6 gelagert. Die Lagerung nimmt die auf die Gewindestange 10 einwirkenden Axialkräfte auf.

Alternativ kann der Gewindetrieb auch derart ausgebildet sein, dass die Mutter 11 mit dem Elektromotor 2 gekoppelt ist und eine Drehbewegung ausführt. Dann führt die Gewindestange 10 eine Linearbewegung aus, die auf die Kolbenstange 8 übertragen wird.

Prinzipiell kann der Gewindetrieb auch dahingehend erweitert sein, dass dieser ein Getriebe aufweist.

Im Elektromotor 2 und in Komponenten der Mechanikeinheit 3 generierte Wärme wird über Wärmerohre 12 aus dem Elektrozylinder 1 ausgeführt und über den Montageflansch 9 an das Maschinengestell abgeleitet.

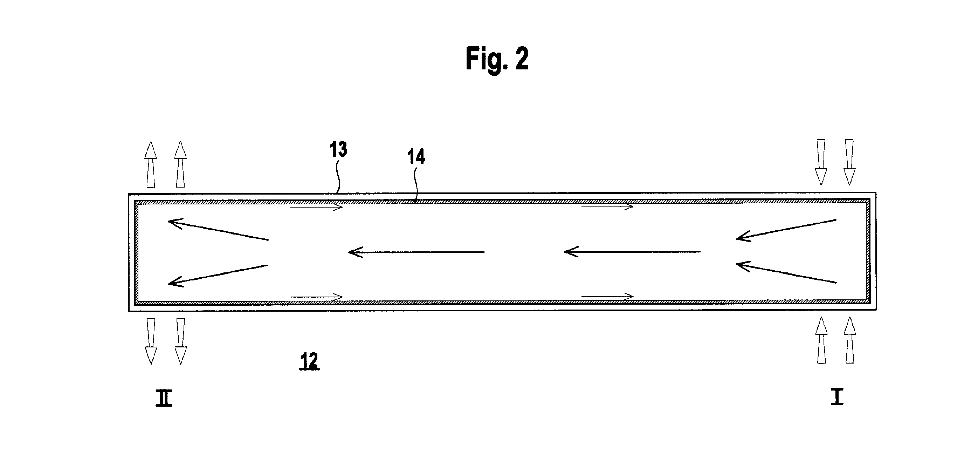

Figur 2 zeigt den prinzipiellen Aufbau eines Wärmerohrs 12. Das Wärmerohr 12 weist als Ummantelung ein Rohr auf, welches im vorliegenden Fall aus einem geschlossenen, zylindrischen Kupferrohr 13 besteht. An der Innenseite des Kupferrohrs 13 ist über die gesamte Länge ein Material mit Kapillarwirkung, im vorliegenden Fall ein Sintermaterial 14, angeordnet. Im Innenraum des Rohrs befindet sich als Wärmetransportmedium Wasser, das auch als Wasserdampf vorliegen kann.

Wie in Figur 2 dargestellt, wird das Wärmerohr 12 an einem Ende in Kontakt mit einer Wärmequelle oder allgemein einem heißen Körper gebracht, so dass sich dort eine Heizzone I bildet. Das andere Ende des Wärmerohrs 12 wird in Kontakt mit einem kühlen Körper gebracht, so dass sich dort eine Kühlzone II bildet.

Im Bereich der Heizzone I verdampft das Wasser im Wärmerohr 12 und wird als Wasserdampf, wie mit den Pfeilen im Wärmerohr 12 gekennzeichnet, zur Kühlzone transportiert. Dadurch erfolgt ein Wärmetransport von der Heizzone zur Kühlzone, wobei der Wärmetransport nahezu isotherm abläuft, da die Temperatur des Wärmerohrs 12 über seine Länge nahezu konstant bleibt. In der Heizzone kondensiert der Wasserdampf. Das kondensierte Wasser wird durch die Kapillarwirkung im Sintermaterial zurück zur Heizzone transportiert, wo das Wasser wieder verdampft. Somit wird ein geschlossener Kreislauf erhalten. Mit dem so ausgebildeten Wärmerohr 12 können große Wärmemengen transportiert werden.

Wie Figur 1 zeigt, sind erste Wärmerohre 12a in Ausnehmungen im Gehäuse 7 gelagert. Diese Wärmerohre 12a sind vorzugsweise rotationssymmetrisch zur Achse A angeordnet. Dabei sind die Wärmerohre 12a an einem längsseitigen Ende in Kontakt mit der Lagerung 6 verbunden und am anderen Enden mit dem Mantageflansch 9 verbunden. An den Enden der Wärmerohre 12a, die an der Lagerung 6 angeordnet sind, bilden sich die Heizzonen aus, während sich an den Enden der Wärmerohre 12, die am Montageflansch 9 angeordnet sind, die Kühlzonen ausbilden. Mit diesen Wärmerohren 12a wird einerseits im Elektromotor 2 entstehende Wärme zum Montageflansch 9 abgeleitet. Zum anderen wird durch Reibung und durch auf die Gewindestange 10 einwirkende Kräfte in der Lagerung 6 erzeugte Wärme über die Wärmerohre 12a zum Montageflansch 9 abgeleitet. Da mit den Wärmerohren 12a große Wärmemengen transportiert werden können, braucht der Gehäusekörper der Mechanikeinheit 3 selbst keine hohe Wärmeleitfähigkeit aufweisen, um die im Elektromotor 2 entstehende Wärme abzuführen.

Wie aus Figur 1 weiter ersichtlich, befindet sich an der Mutter 11 ein Gleitlager 15, das in Wärmekontakt mit den Wärmerohren 12a steht. So kann auch in der Mutter 11 entstehende Wärme über die Wärmerohre 12a abgeleitet werden.

Schließlich ist die Gewindestange 10 als Hohlkörper ausgebildet, wobei im Innenraum der Gewindestange 10 selbst ein weiteres Wärmerohr 12b geführt ist. Mit diesem Wärmerohr 12b kann in der Gewindestange 10 entstehende Wärme direkt abgeleitet werden.

Die Anordnung gemäß Figur 1 kann dahingehend abgewandelt sein, dass die Gewindestange 10 die Motorwelle 4 bildet und die Lagerung 6 in den Elektromotor 2 hinein versetzt ist und hinter der Rotor-Stator-Einheit 2a an dem der Mechanikeinheit 3 abgewandten Ende des Elektromotors 2 angeordnet ist. Dann ist die Mutter 11 an dem dem Elektromotor 2 zugewandten Ende der Mechanikeinheit 3 angeordnet und bildet neben der Lagerung 6 ein weiteres Lager für die Motorwelle 4, das heißt die Gewindestange 10. Auch bei dieser Ausführungsform können analog zur Ausführungsform gemäß Figur 1 Wärmerohre 12, 12a, 12b im Gehäuse 7 der Mechanikeinheit 3 in dessen Längsrichtung verlaufend angeordnet sein.

### Bezugszeichenliste

- (1): Elektrozylinder
- (2): Elektromotor
- (2a): Rotor-Stator-Einheit
- (3): Mechanikeinheit
- (4): Motorwelle
- (5): Motorgehäuse
- (6): Lagerung
- (7): Gehäuse
- (8): Kolbenstange
- (9): Montageflansch
- (10): Gewindestange
- (11): Mutter
- (12): Wärmerohr
- (12a): Wärmerohr
- (12b): Wärmerohr
- (13): Kupferrohr
- (14): Sintermaterial
- (15): Gleitlager

## Patentansprüche

1. Elektrozylinder (1) mit einem Elektromotor (2) und einer Mechanikeinheit (3), welche ein Stellelement aufweist, wobei der Elektromotor (2) eine Linearbewegung des Stellelements erzeugt, **dadurch gekennzeichnet, dass** zur Abfuhr von Wärme eine Anordnung von Wärmerohren (12) vorgesehen ist.

2. Elektrozylinder nach Anspruch 1, **dadurch gekennzeichnet, dass** das oder jedes Wärmerohr (12) in der Mechanikeinheit (3) vorgesehen ist.

3. Elektrozylinder nach einem der Ansprüche 1 oder 2, **dadurch gekennzeichnet, dass** das oder jedes Wärmerohr (12) in Längsrichtung der Mechanikeinheit (3) verlaufend angeordnet ist.

4. Elektrozylinder nach einem der Ansprüche 1 bis 3, **dadurch gekennzeichnet, dass** an einem längsseitigen Ende der Mechanikeinheit (3) ein Montageflansch (9) zum Anschluss an eine externe Einheit vorgesehen ist, und dass der Montageflansch (9) Kontaktflächen für das oder die Wärmerohre (12) ausbildet.

5. Elektrozylinder nach einem der Ansprüche 1 bis 4, **dadurch gekennzeichnet, dass** die Mechanikeinheit (3) ein Gehäuse (7) aufweist, in welchem das oder die Wärmerohre (12) angeordnet sind.

6. Elektrozylinder nach Anspruch 5, **dadurch gekennzeichnet, dass** das Gehäuse (7) einen Gehäusekörper mit Bohrungen aufweist, in welchen Wärmerohre (12) geführt sind.

7. Elektrozylinder nach einem der Ansprüche 1 bis 6, **dadurch gekennzeichnet, dass** wenigstens ein Wärmerohr (12) über ein Gleitlager (15) mit beweglichen Teilen der Mechanikeinheit (3) verbunden ist.

8. Elektrozylinder nach einem der Ansprüche 1 bis 7, **dadurch gekennzeichnet, dass** die Mechanikeinheit (3) einen Gewindetrieb mit einer Gewindestange (10) und einer die Gewindestange (10) umschließenden Mutter (11) aufweist, wobei entweder die Gewindestange (10) eine Linearbewegung und die Mutter (11) eine Drehbewegung ausführt, oder die Mutter (11) eine Linearbewegung und die Gewindestange (10) eine Drehbewegung ausführt.

9. Elektrozylinder nach Anspruch 8, **dadurch gekennzeichnet, dass** die Mechanikeinheit (3) eine Lagerung (6) für die Gewindestange (10) aufweist, wobei wenigstens ein Wärmerohr (12) zur Ableitung von in der Lagerung (6) generierter Wärme vorgesehen ist.

10. Elektrozylinder nach Anspruch 8 oder 9, **dadurch gekennzeichnet, dass** ein in der Gewindestange (10) verlaufendes Wärmerohr (12) vorgesehen ist.

11. Elektrozylinder nach Anspruch 10, **dadurch gekennzeichnet, dass** wenigstens ein Wärmerohr (12) in Kontakt mit der Mutter (11) ist.

12. Elektrozylinder nach einem der Ansprüche 9 bis 11, **dadurch gekennzeichnet, dass** das Stellelement von einer koaxial zur Gewindestange (10) verlaufenden Kolbenstange (8) gebildet ist.
